Europäisches Patentamt

European Patent Office

Office européen des brevets

(11) Veröffentlichungsnummer: **0 152 932**
A2

## (12) EUROPÄISCHE PATENTANMELDUNG

(21) Anmeldenummer: 85101705.3

(22) Anmeldetag: 15.02.85

(51) Int. Cl.⁴: **G 02 B 6/44**, G 02 B 6/42

(30) Priorität: 17.02.84 DE 3405805

(43) Veröffentlichungstag der Anmeldung: 28.08.85
Patentblatt 85/35

(84) Benannte Vertragsstaaten: **AT BE CH DE FR GB IT LI NL SE**

(71) Anmelder: **Siemens Aktiengesellschaft, Berlin und München Wittelsbacherplatz 2, D-8000 München 2 (DE)**

(72) Erfinder: **Prussas, Herbert, Dipl.-Ing., Mozartring 11, D-8069 Reichertshausen (DE)**

(54) Schutzrohranordnung für Glasfaser.

(57) Schutzrohranordnung für Glasfaser (S/L), mit einer Glasfaser (S/L), mit einem steifen, die Glasfaser (S/L) umgebenden schützenden und ausrichtenden Schutzrohr (R), und mit Betriebstemperaturen und Lagerungstemperaturen, die zwischen einer maximalen Grenztemperatur und minimalen Grenztemperatur liegen. Die Glasfaser (S/L) ist am Schutzrohr (R) an zwei verschiedenen, bevorzugt an den Rohrenden liegenden Befestigungsstellen (S1, S2), nämlich an den Rohrenden bzw. an der Rohrinnenoberfläche, befestigt. Die Glasfaser (S/L) weist unterhalb der maximalen Grenztemperatur zwischen ihren beiden Befestigungsstellen (S1, S2) eine grössere Länge auf, als dem Abstand der beiden Befestigungsstellen (S1, S2), im scherpsannungsfreien (SP) Zustand der Befestigungen, entspricht. Die Glasfaser (S/L) hängt unterhalb der maximalen Grenztemperatur und oberhalb der minimalen nach dem Befestigen (S1, S2) auftretenden Grenztemperatur an ihren Befestigungsstellen (S1, S2) so locker, dass auf die Befestigungen (S1, S2) nur solche Glasfaser-Längsspannungen (SP) – z.B. Längsdruckspannungen unter 1 N/mm² bei Befestigung mit Lötmassen – wirken, die auch auf Dauer noch keine Kriechvorgänge auslösen.

SIEMENS AKTIENGESELLSCHAFT

Berlin und München

Unser Zeichen:

VPA

84 P 1 126 E

**Schutzrohranordnung für Glasfaser.**

Die Erfindung betrifft eine Weiterentwicklung des im Oberbegriff des Patentanspruches 1 definierten Gegenstandes, welcher für sich z.B. durch die ältere Anmeldung P 33 37 131.8 = VPA 83 P 1838 DE angeregt ist, mit der Einschränkung, daß dort nichts über die thermische Leitfähigkeit des Rohres angegeben ist.

Die Erfindung wurde insbesondere für ein optoelektronisches Sendemodul bzw. Empfangsmodul eines Fernmeldesystems entwickelt. Sie eignet sich aber darüberhinaus schlechthin für optoelektronische Module, welchen über eine Glasfaser Lichtsignale zugeführt oder von welchen über eine Glasfaser Lichtsignale abgegeben werden.

Es zeigte sich, daß nicht nur die Glasfaser im Schutzrohr, auch nach ihrer Befestigung im Schutzrohr, gegen Bruch, z.B. zu große Längszugspannungen in der Glasfaser, z.B. bei einer harten Stoßbelastung des Schutzrohres, geschützt werden muß, sondern es muß oft auch vermieden werden, daß die Glasfaser z.B. durch andauernde solche Längszugspannungen oder Längsdruckspannungen ihre Befestigungen am Schutzrohr, z.B. durch Kriechvorgänge, zerstört oder spürbar deformiert - diese Deformierung oder Zerstörung ist oft besonders gefährlich, weil der meistens nur sehr gering aus dem ersten Rohrende des Schutzrohres steif herausragende Taper der Glasfaser langzeitstabil mit oft extremer Genauigkeit - z.B. auf 0,1 /um genau - auf die optisch aktive Stelle des optoelektronischen Bauelements im Inneren des Modulgehäuses zu richten ist.

Be 1 Ky/15.02.1984

0152932

Es zeigte sich vor allem, daß solche Gefahren für die Glasfaser und/oder deren Befestigung bzw. Taperjustierung nicht nur durch jene Stöße, sondern auch durch Temperaturänderungen hervorgerufen werden, weil sich bei Temperaturerhöhungen normalerweise das Schutzrohr stärker ausdehnt als die zwischen ihren beiden Befestigungen hängende Glasfaser.

Die Erfindung vermeidet solche Gefahren durch die im Patentanspruch 1 angegebenen Maßnahmen auf eine elegante Weise ohne großem Aufwand.

Die in den Unteransprüchen angegebenen Maßnahmen gestatten zusätzliche Vorteile. Es gestatten nämlich die Maßnahmen gemäß Patentanspruch

2, sogar bei stärkerer Temperaturänderung ein lockeres Ausknicken der Glasfaser zwischen ihren beiden Befestigungen zu erleichtern,

3, sogar bei stärkerer Temperaturänderung ein elastisches, reversibles Nachgeben der einen, abseits vom Taper gelegenen Befestigung zu erleichtern,

4, eine bevorzugte Art der Anwendung der Erfindung, sowie

5, die genannten Gefahren für die Glasfaser und ihre Befestigungen weiter zu verringern.

Die Erfindung und deren Weiterbildungen werden durch die in den Figuren gezeigten Schemen von Ausführungsbeispielen der Erfindung weiter erläutert, wobei die Figur

1 ein Beispiel der Erfindung bei einer Temperatur nahe der maximalen Grenztemperatur,

2 ein Beispiel der Erfindung bei einer Temperatur zwischen den beiden Grenztemperaturen, sowie

3 ein Beispiel für eine Anwendung der Erfindung zeigen.

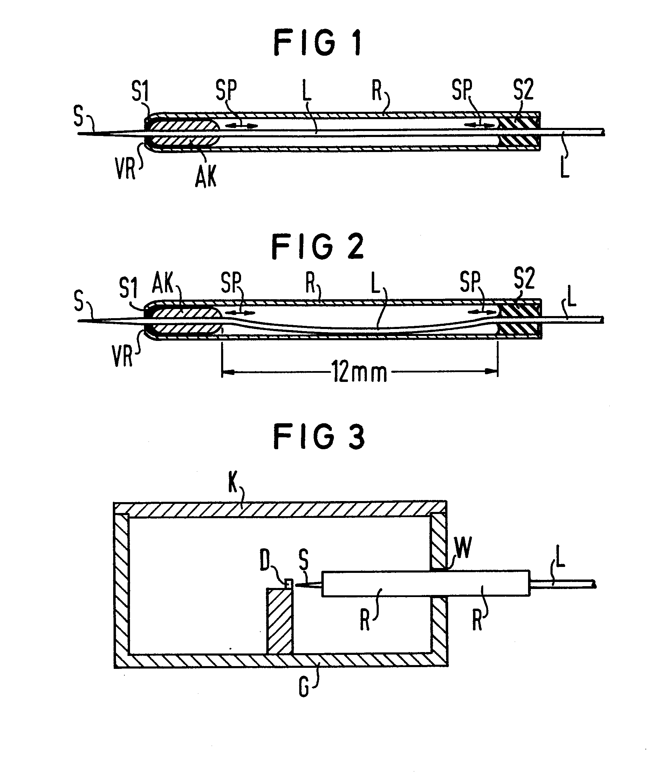

Die Figuren zeigen also jeweils Beispiele mit der Schutzrohranordnung gem. der Erfindung. Sie enthalten jeweils die an zwei Stellen S1, S2 im Schutzrohr R befestigte Glasfaser S/L, wobei die Glasfaser S/L von dem Schutzrohr R umgeben, geschützt und steif ausgerichtet wird. Das Schutzrohr R ist z.B. gem. Fig. 3 durch eine Wandöffnung W eines optoelektronischen Modulgehäuses G/K steckbar und auf das optoelektronische Bauelement D richtbar. Das Schutzrohr R besteht bevorzugt aus Metall, das z.B. thermisch ziemlich schlecht leitend sein kann. Dann ist das Schutzrohr R meistens ausreichend steif, so daß der Taper S im Modulgehäuse G/K seine Ausrichtung auf die optisch aktive Stelle des Bauelements D unabhängig von der jeweiligen räumlichen Lage des Modulgehäuses G/K beibehält, bei Bedarf sogar z.B. auf 0,05 μm genau oder noch genauer.

Durch Erwärmung dehnt sich das Schutzrohr R jeweils stärker aus als der zwischen den zwei Befestigungen S1, S2 eingespannte Glasfaserabschnitt S/L. Bei zu starker Erwärmung, vgl. Fig. 1, treten dann so starke Längszugspannungen der dann ziemlich straff gespannten Glasfaser S/L auf,

- daß die Glasfaser S/L selbst beschädigt wird, z.B. reißt, besonders wenn dann das Modul auch noch durch einen scharfen Stoß belastet wird, der die Längszugspannung SP weiter erhöht, und/oder

- daß, besonders bei lange andauernder, zu starker Erwärmung, mindestens eine der beiden Befestigungen S1, S2 sich durch Scherkräfte an den Trennflächen zwischen der Glasfaser S/L und den Befestigungen S1, S2 bleibend verformt, besonders durch Kriechen, und/oder völlig zerstört wird.

Dann ist aber die Weiterleitung des Lichts in der Glasfaser S/L gestört; insbesondere kann dann die oft erforderliche extreme Genauigkeit der Zentrierung bzw.

Justierung der Taperspitze S auf das Bauelement D verschwunden sein.

Die Schutzrohranordnung aus Glasfaser S/L, Befestigungen S1, S2 und Schutzrohr R soll daher stets Betriebstemperaturen und Lagertemperaturen aufweisen, die zwischen einer maximalen Grenztemperatur und einer minimalen Grenztemperatur liegen.

Bei der Erfindung ist also die Glasfaser S/L am Schutzrohr R an zwei verschiedenen, bevorzugt an den Rohrenden liegenden Befestigungsstellen S1, S2, nämlich unmittelbar an den Rohrenden bzw. an der Innenoberfläche des Schutzrohres R, befestigt. Erfindungsgemäß weist, zur Vermeidung des Glasfaserbruches und/oder der Befestigungsverformung, die Glasfaser S/L unterhalb der maximalen Grenztemperatur zwischen ihren beiden Befestigungsstellen S1, S2 eine größere Länge auf als dem Abstand, vgl. als Beispiel den 12 mm-Abstand in Fig. 2, der beiden Befestigungsstellen S1, S2 im scherspannungsfreien Zustand dieser Befestigungen S1, S2 entspricht, so daß bei den Betriebs- und Lagerungstemperaturen die Glasfaser S/L von ihren Befestigungen S1, S2 gestaucht wird, also unter Längsdruckspannungen SP steht. Die Glasfaser S/L hängt aber erfindungsgemäß unterhalb der maximalen Grenztemperatur und oberhalb der minimalen,nach dem Befestigen S1, S2 auftretenden Grenztemperatur an ihren Befestigungsstellen S1, S2 so locker, und zwar bevorzugt ausgeknickt oder locker geschlängelt, daß auf die Befestigungen S1, S2 nur Glasfaser-Längsdruckspannungen - z.B. Längsdruckspannungen unter 1 N/mm$^2$ für eine Befestigung bei S1 und S2 mit Lötmassen - wirken, die auch auf Dauer noch keine Kriechvorgänge in den Befestigungen S1, S2 auslösen, besonders nicht an der tapernahen Befestigung S1.

0152932

Es gibt vor allem zwei weiterbildende Maßnahmen, um ein besonders lockeres Hängen der Glasfaser S/L an ihren Befestigungen S1, S2 zu erreichen, wobei beide Maßnahmen gleichzeitig oder beliebig auch nur die eine oder die andere alleine  wenngleich dann eben mit geringerer Auswirkung auf die Lockerheit, anwendbar sind.

Die erste weiterbildende Maßnahme zur Erhöhung der Lockerheit besteht darin, daß die Entfernung zwischen den beiden Befestigungsstellen S1, S2 deutlich größer gemacht wird als jene kritische minimale Länge, die Knicklänge, beträgt, bei der die Glasfaser S/L - entsprechend ihrer Schlankheit, dem Glasfaserquerschnitt und dem Elastizitätsmodul des Glases - bei Längsdruckspannung SP gerade noch knicken kann. Beträgt also bei einer gegebenen Glasfaser diese kritische Knicklänge z.B. 8 mm, dann sollte also der Abstand der Befestigungsstellen S1, S2 und damit die dort hängende Glasfaser L deutlich größer als 8 mm sein, also gemäß Fig. 2 z.B. 12 mm oder noch erheblich länger. Dann ist die Glasfaser von ihren Befestigungen S1, S2 mit sehr kleinen Druckkräften SP zusammendrückbar, weil dann die Glasfaser dort sofort locker durchhängt, evtl. sogar sich locker im Schutzrohrinneren schlängelt.

Die zweite weiterbildende Maßnahme zur Erhöhung der Lockerheit besteht darin, daß die eine Befestigung, z.B. S1, bevorzugt die Befestigung S1 nahe neben dem Taper S - mit einem unelastischen Mittel, z.B. Lötmetall, aber die andere Befestigung, dann S2, mit einem hochelastischen Mittel, z.B. Silicongummi, hergestellt wird, vgl. Fig. 1 und 2. Weil die hochelastische Befestigung nachgeben kann, bleiben die Glasfaserlängsspannungen SP insbesondere auch bei hohen Temperaturen gering.

Die Figuren 1 und 2 zeigen übrigens jeweils Beispiele mit einer Glasfaser S/L, die in der Nähe des Tapers S von einem Abstandskörper AK umgeben ist, also in der Nähe der Spitze S der Glasfaser S/L. Dieser Abstandskörper AK ist ebenfalls, z.B. mittels Lötmasse S1, am ersten Rohrende VR befestigt. Der Abstandskörper AK dient zur Anbringung des Tapers S an dem ersten Rohrende VR. Der Außendurchmesser des Abstandskörpers AK ist etwas kleiner, z.B. um 3 % bis 15 % kleiner, als der abseits des ersten Rohrendes VR gegebene Schutzrohrinnendurchmesser. Auf diese Weise ist der Abstandskörper AK und damit der Taper S der Glasfaser S/L , mit engem lichten Spalt zwischen Rohrinnenoberfläche einerseits und Glasfaser S/L bzw. Abstandskörper AK andererseits, vgl. Fig. 1 und 2, von rechts her in und durch das Rohr R hindurch schiebbar, z.B. durch Schieben des mittels Preßgas, - und zwar jeweils unter deutlicher Verminderung der Gefahr einer Verschmutzung und/oder Beschädigung des Tapers S schiebbar, bis der Taper S der Glasfaser S/L schließlich beim ersten Rohrende VR, zumindest teilweise, wieder aus dem Rohr R herausragt. Dieser Abstandskörper ist für sich in der gleichzeitig eingereichten Anmeldung ...... 84 E 1205 detailliert erläutert. Dieser Körper AK dient bei der Erfindung, nach seiner Befestigung S1 am Schutzrohr R - z.B. durch Lötmassen S1 - gleichsam als eine der beiden Glasfaserbefestigungen S1, S2 der Erfindung.

Fig. 3 zeigt eine Anwendung der Erfindung, als Schema eines bevorzugten Anwendungsbeispiels, bei dem das Schutzrohr R durch eine Wandöffnung W eines optoelektronischen Modulgehäuses G/K gesteckt ist und am Modulgehäuse mittelbar oder unmittelbar befestigt ist. Die aus dem ersten Rohrende VR im Inneren des Modulgehäuses G/K herausragende Spitze S der Glasfaser ist auf die optisch aktive Stelle eines im Inneren des Modulgehäuses G/K aus Wanne G und lichtdichtem Deckel K angebrachten optoelektronischen Bauelementes D gerichtet.

Um sicher zu sein, daß die Glasfaser S/L bei der maximalen Betriebs- bzw. Lagerungstemperatur nicht unter Längszugspannungen SP steht, kann man, vgl. Fig. 1 und 2,
- zumindest die als zweite hergestellte, eine S1 oder andere S2 Befestigungsstelle, oder auch
- beide, dann gleichzeitig hergestellten Befestigungsstellen S1, S2

zumindest bei der später maximal zu erwartenden Betriebstemperatur - z.B. bei 65° C - des Schutzrohres R, d.h. evtl. auch bei noch höheren Temperaturen - z. B. bei 80° C - herstellen. Dann ist nämlich sicher, daß im Betrieb und bei der Lagerung nie starke Scherkräfte auf die Befestigungen einwirken, oder daß gar die Glasfaser S/L selbst beschädigt bzw. überdehnt wird.

5 Patentansprüche
3 Figuren

0152932

Patentansprüche.

1. Schutzrohranordnung für Glasfaser (S/L), insbesondere in einem optoelektronischen Modulgehäuse (G/K), mit
- einer Glasfaser (S/L),
- einem steifen, die Glasfaser (S/L) umgebenden schützenden und ausrichtenden, bevorzugt aus thermisch schlecht leitendem Metall bestehenden Schutzrohr (R), und
- Betriebstemperaturen und Lagerungstemperaturen, die zwischen einer maximalen Grenztemperatur und minimalen Grenztemperatur liegen,

d a d u r c h   g e k e n n z e i c h n e t , daß
- die Glasfaser (S/L) am Schutzrohr (R) an zwei verschiedenen, bevorzugt an den Rohrenden liegenden Befestigungsstellen (S1, S2), nämlich an den Rohrenden bzw. an der Rohrinnenoberfläche, befestigt ist,
- die Glasfaser (S/L) unterhalb der maximalen Grenztemperatur zwischen ihren beiden Befestigungsstellen (S1, S2) eine größere Länge aufweist als dem Abstand der beiden Befestigungsstellen (S1, S2), im scherspannungsfreien (SP) Zustand der Befestigungen,*)und
- die Glasfaser (S/L), unterhalb der maximalen Grenztemperatur und oberhalb der minimalen nach dem Befestigen (S1, S2) auftretenden Grenztemperatur, an ihren Befestigungsstellen (S1, S2) so locker, insbesondere ausgeknickt oder geschlängelt, hängt, daß auf die Befestigungen (S1, S2) nur Glasfaser-Längsspannungen - z.B. Längsdruckspannungen unter 1 N/mm$^2$ bei Befestigung mit Lötmassen - wirken, die auch auf Dauer noch keine Kriechvorgänge auslösen.

*) entspricht,

2. Schutzanordnung nach Patentanspruch 1,
d a d u r c h   g e k e n n z e i c h n e t , daß
- die Entfernung zwischen den beiden Befestigungsstellen (S1, S2) deutlich größer als die kritische Knicklänge, z.B. 8 mm, der Glasfaser (L) zwischen den Befestigungsstellen (S1, S2) beträgt.

3. Schutzrohranordnung nach Patentanspruch 1 oder 2,
d a d u r c h   g e k e n n z e i c h n e t ,   daß
- die eine Befestigung (S1) mit einem unelastischen (Lötmetall), die andere Befestigung (S2) mit einem hochelastischen Mittel (Silicongummi) hergestellt ist.

4. Anwendung der Schutzrohranordnung nach Patentanspruch 1, 2 oder 3,
d a d u r c h   g e k e n n z e i c h n e t ,   daß
- das Schutzrohr (R) durch eine Wandöffnung (W) eines optoelektronischen Modulgehäuses (G/K) gesteckt ist und am Modulgehäuse mittelbar oder unmittelbar befestigt ist, und
- eine aus dem ersten Rohrende (VR) im Inneren des Modulgehäuses (G/K) herausragende Spitze (S) der Glasfaser auf die optisch aktive Stelle eines im Inneren des Modulgehäuses (G/K) angebrachten optoelektronischen Bauelementes (D) gerichtet ist.

5. Verfahren zum Herstellen der Schutzrohranordnung, die in einem der vorhergehenden Patentansprüche genannt ist,
d a d u r c h   g e k e n n z e i c h n e t ,   daß
- zumindest die als zweite hergestellte, eine (S1) oder andere (S2) Befestigungsstelle, oder
- beide, dann gleichzeitig hergestellten Befestigungsstellen (S1, S2)
-- zumindest bei der später maximal zu erwartenden Betriebstemperatur - z.B. 65° C - des Schutzrohres (R), d.h. evtl. auch bei noch höheren Temperaturen - z.B. 80° C - hergestellt wird/werden.

1/1

0152932

FIG 1

FIG 2

12mm

FIG 3